(19) **Europäisches Patentamt**

**European Patent Office**

**Office européen des brevets**

(11) **EP 0 578 149 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int. Cl.[7]: **B32B 27/32**

(21) Anmeldenummer: **93110599.3**

(22) Anmeldetag: **02.07.1993**

(54) **Niedrig siegelnde, biaxial orientierte Polyolefin-Mehrschichtfolie mit hohem Schrumpf**

Low-temperature heat-sealable biaxially oriented and highly-shrinkable polyolefin multilayer film

Feuille multicouche de polyoléfines, scellable à basse température et orientée biaxialement et à rétraction élevée

(84) Benannte Vertragsstaaten:
**BE DE ES FR GB IT NL**

(30) Priorität: **10.07.1992 DE 4222740**

(43) Veröffentlichungstag der Anmeldung:
**12.01.1994 Patentblatt 1994/02**

(73) Patentinhaber:
**Hoechst Trespaphan GmbH
66539 Neunkirchen (DE)**

(72) Erfinder:
• **Peiffer, Herbert, Dr.
D-6500 Mainz-Finthen (DE)**

• **Murschall, Ursula, Dr.
D-6505 Nierstein (DE)**

(74) Vertreter:
**Luderschmidt, Schüler & Partner GbR
Patentanwälte,
Postfach 3929
65029 Wiesbaden (DE)**

(56) Entgegenhaltungen:
**EP-A- 0 340 579         EP-A- 0 400 456
EP-A- 0 481 344         EP-A- 0 489 373
GB-A- 2 055 688         GB-A- 2 115 348**

**Beschreibung**

Die vorliegende Erfindung betrifft eine niedrig siegelnde, transparente, biaxial orientierte, coextrudierte Polyolefin-Mehrschichtfolie umfassend eine Basisschicht und mindestens eine einseitig aufgebrachte Deckschicht. Die Mehrschichtfolie zeichnet sich durch einen hohen Schrumpf in Längs- und Querrichtung in Kombination mit exzellenten optischen Eigenschaften und einer guten Maschinengängigkeit aus. Weiterhin betrifft die Erfindung ein Verfahren zur Herstellung einer solchen Folie und deren Verwendung.

Schrumpffolien sind im Stand der Technik bekannt und finden als Verpackungsfolien breite Anwendung.

Die Schrumpfverpackung wird üblicherweise über die Arbeitsschritte Halbschlauchlegung, Guteinbringung, Trennschweißung und nachfolgende Schrumpfung im Schrumpfofen hergestellt. Auf diese Weise erhält man eine sehr eng anliegende faltenfreie Folienverpackung, wie sie in vielen Fällen besonders wünschenswert ist. Damit dieser enge Einschlag zuverlässig erzielt wird, müssen die verwendeten Folien hohe Schrumpfwerte aufweisen, da die Folienumhüllung nach dem Arbeitsschritt Trennschweißen das Füllgut relativ locker umgibt. Dies ergibt sich aus dem Umstand, daß der Schweißdraht nicht beliebig dicht an das Packgut herangeführt werden kann. Die hohen Schrumpfwerte der Folien sind daher unabdingbare Voraussetzung für deren Verwendung als herkömmliche Schrumpfverpackung. Solche Folien sind z. B. in EP-A-0 436 196, DE-A-19 54 467, DE-A-32 15 120 und EP-A-0 350 859 beschrieben.

Siegelfähige Folien sind als Verpackungsmaterialien ebenfalls weitverbreitet und allgemein bekannt. Die Siegelfähigkeit des Materials ermöglicht das Verpacken der Güter auf schnellaufenden Verpackungsmaschinen, wodurch erhebliche wirtschaftliche Vorteile ermöglicht werden.

Siegelbare, biaxial orientierte Polyolefin-Mehrschichtfolien, bei denen die Basisschicht aus Propylenhomopolymeren und die Siegelschicht/en (Außenschicht/en oder Deckschicht/en) aus siegelbaren Olefinpolymeren bestehen, sind in zahlreichen Druckschriften beschrieben (z. B. EP-A-0 194 588, EP-A-0 008 904, US-A-4 419 411). Diese Polyolefinmehrschichtfolien besitzen die für Verpackungsfolien wichtigen Eigenschaften, nämlich einen großen Siegelbereich, eine gute Heißsiegelbarkeit, eine relativ hohe Kratzfestigkeit, eine geringe Reibung und damit gute Laufeigenschaften auf schnellaufenden Verpackungsmaschinen unterschiedlichenTyps.

Die beschriebenen Folien werden in der Regel so hergestellt, daß sie möglichst dimensionsstabil sind, d. h. diese Folien weisen einen möglichst niedrigen Schrumpf in Längs- und Querrichtung auf. Im allgemeinen zeigen derartige Verpackungsfolien bei 120 °C Schrumpfwerte von kleiner 5 % in Längsrichtung und kleiner 4 % in Querrichtung. Bisher war man der Meinung, daß Folien mit diesen niedrigen Schrumpfwerten ein optisch gutes Einschlagbild liefern. Tatsächlich aber sind die Packungen lose oder blusig eingeschlagen und zeigen an den Kanten Falten und Wellen und sind daher für Güter, bei denen eine besonders eng anliegende Verpackung gefordert ist, nicht geeignet.

Auf der Suche nach siegelfähigen Schrumpffolien stellte sich heraus, daß herkömmliche Schrumpffolien für eine siegelfähige Schrumpffolie nicht geeignet sind. Die Ausrüstung der bekannten hochschrumpffähigen Folien mit einer Siegelschicht ermöglicht zwar deren Einsatz auf Verpackungsmaschinen, durch die ausgeprägten Schrumpfeigenschaften, welche das gewünschte enge Anliegen der Verpackung gewährleisten, schrumpfen jedoch auch die Siegelnähte so stark, daß das optische Erscheinungsbild der Verpackung in nicht akzeptabler Weise verunstaltet wird.

Aus der EP-A-0 489 373 sind siegelfähige Schrumpffolien bekannt, welche aus einer PP-Homopolymer-Basisschicht und Ethylen-Propylen-Copolymer-Deckschichten aufgebaut sind. Diese Folien weisen gegenüber herkömmlich siegelfähigen Verpackungsfolien einen erhöhten Schrumpf auf, jedoch sind die Schrumpfeigenschaften nicht ausreichend, wenn eng anliegende Umhüllungen gefordert sind.

Die Aufgabe der vorliegenden Erfindung bestand nun darin, eine biaxial orientierte, niedrig siegelnde Polyolefin-Mehrschichtfolie zur Verfügung zu stellen, die exzellente optische Eigenschaften (niedrige Folientrübung, hoher Oberflächenglanz) und eine gute Maschinengängigkeit zeigt, ein enges, werbewirksames, wellen- und faltenfreies Einschlagbild liefert und gute bis sehr gute Schrumpfeigenschaften aufweist. Dabei müssen diese Schrumpfeigenschaffen gleichzeitig im Hinblick auf eine optisch einwandfreie Siegelnaht optimiert sein, welche durch die Schrumpfung nicht beeinträchtigt werden darf.

Gelöst wird diese Aufgabe durch eine Mehrschichtfolie der eingangs genannten Gattung, deren Merkmale darin zu sehen sind, daß

die Basisschicht eine Mischung enthält, welche ein Polypropylen-Homopolymer und/oder Copolymer aus $\alpha$-Olefinen mit 2 bis 8 C-Atomen und/oder ein Terpolymer aus Propylen und einem weiteren $\alpha$-Olefin mit 2 bis 8 C-Atomen umfaßt,

wobei diese Mischung mindestens 50 Gew.-%, bezogen auf die Gesamtmischung, Ethylen-Propylen-Burylen-Terpolymer und/oder ein Ethylen-Propylen-Copolymer und/oder Propylen-Butylen-Copolymer umfaßt, und wobei diese Co- und/oder Terpolymeren einen Schmelzpunkt im Bereich von 100 - 150 °C haben,

die Deckschicht eine Mischung aus Ethylen-Propylen-Butylen-Terpolymer und/oder

ein Ethylen-Propylen-Copolymer und/oder ein Ethylen-Butylen-Copolymer und/oder ein Propylen-Butylen-Copolymer enthält.

a) die Mehrschichtfolie bei 120 °C einen Längsschrumpf von größer 10 %, und einen Querschrumpf von größer 10 aufweist;

b) die Mehrschichtfolie bei 90 °C einen Längsschrumpf von höchstens 10 %, und einen Querschrumpf von höchstens 10 %, aufweist; und

c) die Deckschicht/en eine Siegelanspringtemperatur von höchstens 124 °C, vorzugsweise 80 bis 110 °C, aufweist/aufweisen.

Überraschenderweise hat sich gezeigt, daß eine Folie der eingangs genannten Gattung mit einem Längsschrumpf von größer 10 % bei 120 °C, vorzugsweise von mehr als 15 bis 35 %, und einem erhöhten Querschrumpf von größer 10 % bei 120 °C, vorzugsweise von 15 bis 35 %, im Vergleich zu den bekannten Folien nach dem Stand der Technik trotz ihres hohen Schrumpfvermögens optisch einwandfreie Siegelnähte liefert, da die Schrumpfung im Temperaturbereich der Siegelanspringtemperatur eher gering ist (im Verhältnis zum Schrumpfverhalten bei 120 °C). Gleichzeitig liefert sie ein deutlich engeres, falten- und wellenfreies Einschlagsbild als herkömmliche Folien durch den stark anwachsenden Schrumpf bei erhöhter Temperatur. Der enge, falten- und wellenfreie Einschlag in Kombination mit optisch einwandfreien Siegelnähten und die niedrige Folientrübung und der hohe Oberflächenglanz gewährleisten Verpackungen mit einem wesentlich attraktiveren, brillianteren, werbewirksamen Aussehen.

Die Basisschicht der erfindungsgemäßen Mehrschichtfolie eine Mischung enthält, welche ein Polypropylen-Homopolymer und/oder Copolymer aus $\alpha$-olefinen mit 2 bis 8 C-Atomen und/oder ein Terpolymer aus Propylen und einem weiteren $\alpha$-olefin mit 2 bis 8 C-Atomen umfaßt. <u>Diese Mischung umfaßt mindestens 50 Gew.-%, bezogen auf die Gesamtmischung, Ethylen-Propylen- Butylen-Terpolymere und/oder ein Ethylen-Propylen-Copolymer und/oder Propylen-Butylen-Copolymer, wobei diese Co- und/oder Terpolymeren einen Schmelzpunkt im Bereich von 100 - 150 °C haben.</u> Als $\alpha$-olefinische Co- oder Terpolymere sind Copolymere aus Ethylen-Propylen- oder Ethylen-Butylen- oder Propylen-Butylen-Einheiten oder Terpolymere des Propylens bevorzugt. Insbesondere sind Ethylen-Propylen-Copolymere mit einem Ethylengehalt von 10 Gew.-% oder weniger und Ethylen-Propylen-Burylen-Terpolymere mit einem Ethylengehalt von 1 bis 7 Gew.-% und einem Butylengehalt von 4 bis 10 Gew.-% und einem Propylengehalt von 83 bis 95 Gew.-% bevorzugt. Die Angaben in Gew.-% beziehen sich auf das jeweilige Co- oder Terpolymere. Des weiteren sind Mischungen aus zwei oder mehreren der obengenannten olefinischen Polymeren besonders geeignet. Insbesondere sind
Mischungen von Propylen-Copolymeren, vorzugsweise Ethylen-Propylen-Copolymeren und Propylen-Terpolymeren, bevorzugt sowie Mischungen der Propylen-Copolymeren oder Propylen-Terpolymeren mit Polypropylen-Homopolymeren. Besonders bevorzugt sind Mischungen von Ethylen-Propylen-Copolymeren mit Ethylen-Propylen-Butylen-Terpolymeren oder von Ethylen-Propylen-Copolymeren mit PP-Homopolymeren oder von Ethylen-Propylen-Butvlen-Terpolymeren mit PP-Homopolymeren. In den besonders bevorzugte PP-Homopolymere enthaltenden Mischungen bilden die genannten Co- und/oder Terpolymeren den Hauptbestandteil mit mindestens 50 Gew.-%, vorzugsweise 60 bis 98 Gew.-%, bezogen auf die Gesamtmischung. Entsprechend liegt der PP-Homopolymeranteil der Mischungen bei maximal 50 Gew.-%, vorzugsweise im Bereich von 2,0 bis 40 Gew.-%, jeweils bezogen auf die Gesamtmischung. Für dreikomponentige Mischungen, die sowohl Co- als auch Terpolymere enthalten, können die Mischungsverhältnisse der Co- oder Terpolymeren innerhalb weiter Grenzen variieren.

Das Propylen-Homopolymere, welches als Mischungskomponente in der Basisschicht enthalten ist, besteht im wesentlichen, d. h. zu mindestens 90 %, aus Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf Homopolymere, ist besonders bevorzugt. Der Schmelzflußindex des PP-Homopolymeren liegt in einem Bereich von 0,5 bis 8 g/10 min, vorzugsweise 2 bis 5 g/10 min (DIN 53 735).

Die in der Mischung der Basisschicht enthaltenen Co- und/oder Terpolymere haben einen Schmelzpunkt im Bereich von 100 bis 150 °C, vorzugsweise 120 bis 135 °C, und einen Schmelzflußindex im Bereich von 0,5 bis 10 g/10 min, vorzugsweise von 2 bis 8 g/10 min (DIN 53 735).

Die Deckschichten der erfindungsgemäßen Mehrschichtfolie <u>enthalten eine Mischung, welche ein Ethylen-Propylen-Butylen-Terpolymeres und/oder eine Ethylen-Propylen-Copolymeres und/oder ein Ethylen-Butylen-Copolymeres und/oder ein Propylen-Butylen-Copolymeres enthält.</u> Bevorzugt sind Terpolymere von Ethylen und Propylen und Butylen oder Ethylen und Propylen und einem anderen $\alpha$-Olefin mit 5 bis 10 C-Atomen. Bevorzugt sind ebenfalls Mischungen aus zwei oder mehreren der genannten Terpolymeren und Mischungen aus einem oder mehreren der genannten Terpolymeren und einem oder mehreren Copolymer/en aus $\alpha$-Olefinen mit 2 bis 10 C-Atomen. Bevorzugt enthält die Deckschicht Ethylen-Propylen-ButylenTerpolymer oder eine Mischung dieses Terpolymeren mit einem oder mehreren Copolymer/en aus Ethylen-Propylen- oder Ethylen-Butylen- oder Propylen-Butylen-Einheiten, wobei insbesondere statistische Ethylen-Propylen-Copolymere mit einem Ethylengehalt von 2 bis 10 Gew.-%, bevorzugt 5 bis 8 Gew.-%, oder statistische Propylen-Butylen-Copolymere mit einem Butylengehalt von 4 bis 25 Gew.-%, insbesondere 10 bis 20 Gew.-%, bevorzugt sind. Ganz besonders bevorzugt ist ein Ethylen-Propylen-Butylen-Terpolymeres mit einem Ethylengehalt von 1 bis 10 Gew.-%, insbesondere 2 bis 6 Gew.-%, und einem Butylengehalt von 3 bis 20 Gew.-%, insbesondere 8 bis 10 Gew.-%, oder eine Mischung aus einem Ethylen-Propylen-Butylen-Terpolymeren und einem Propylen-Butylen-Copolymeren mit einem Ethylengehalt von 0,1 bis 7 Gew.-% und einem Propylengehalt von 50 bis 90 Gew.-% und einem Butylengehalt von 10 bis 40 Gew.-%, jeweils bezogen auf das Gesamtgewicht der Mischung.

Der Schmelzflußindex des Polymeren bzw. der Polymermischung der Deckschicht beträgt 0,5 bis 10 g/10 min, vorzugsweise 2 bis 8 g/10 min.

Der Schmelzbereich liegt im Bereich von 120 bis 150.

Es ist erfindungswesentlich, daß die Siegelanspringtemperatur des Deckschichtpolymeren niedrig, insbesondere unter 124 °C, liegt. Ansonsten bedingt die erhöhte Temperatur bei der Siegelung, daß gleichzeitig ein erheblicher Schrumpf ausgelöst wird, welcher zur unerwünschten Schrumpfung der Siegelnaht führt. Bevorzugt wird ein Deckschichtmaterial mit einer Siegelanspringtemperatur von 75 bis 110 °C, insbesondere 80 bis 105 °C.

Es wurde gefunden, daß die Folie die eingangs gestellten Anforderungen nur dann erfüllt, wenn die niedrige Siegelanspringtemperatur in Verbindung mit den speziellen Schrumpfeigenschaften realisiert wird. Die gezielte Einstellung eines niedrigen Schrumpfs bei niederen Temperaturen (90 °C) und eines erhöhten Schrumpfs bei höheren Temperaturen (120 °C) ermöglicht überraschenderweise das gewünschte eng anliegende Erscheinungsbild der Verpackung und gleichzeitig eine Siegelung, bei der es nicht zu einer Beeinträchtigung der Siegelnähte kommt. Überraschenderweise konnte so eine siegelfähige und schrumpffähige Folie hergestellt werden, die als Verpackung die optischen Anforderungen hervorragend erfüllt.

Es hat sich weiterhin als besonders vorteilhaft erwiesen, der Basisschicht ein niedermolekulares Harz zuzusetzen, dessen Anteil im Bereich von 1 bis 30 Gew.-%, vorzugsweise 2 bis 10 Gew.-%, liegt. Der Erweichungspunkt des Harzes liegt zwischen 100 und 180 °C (gemessen nach DIN 1995-U4, entspricht ASTM E-28), vorzugsweise über 120 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben).

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind niedrigmolekulare Homopolymere von Styrol oder Copolymere von Styrol mit anderen Monomeren wie Methylstyrol, Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, $\alpha$-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt). Ganz besonders bevorzugt werden die Cyclopentadienpolymerisate mit einem Erweichungspunkt von 120 °C und darüber in der Basisschicht eingesetzt.

Neben diesen bevorzugten Additiven kann die Basisschicht noch weitere übliche Additive in jeweils wirksamen Mengen enthalten.

Die erfindungsgemäße Mehrschichtfolie umfaßt mindestens die Basisschicht und mindestens eine Deckschicht. Bevorzugte Ausführungsformen sind dreischichtig mit beidseitig aufgebrachten Deckschichten, die gleich oder verschieden sein können. Die Gesamtdicke der Folie richtet sich nach ihrem beabsichtigten Verwendungszweck und kann innerhalb weiter Grenzen variieren. Sie liegt bevorzugt in einem Bereich von 10 bis 40 μm. Die Dicke der Deckschicht beträgt 0,1 bis 4 μm, vorzugsweise 0,5 bis 2 μm.

Um bestimmte Eigenschaften der erfindungsgemäßen Polypropylenfolie noch weiter zu verbessern, können sowohl die Basisschicht als auch die Deckschicht/en Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Polymeren der Kernschicht und der Deckschichten verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte **Antistatika** sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit $\omega$-Hydroxy-$(C_1$-$C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%. Des weiteren ist Glycerinmonostearat als Antistatikum bevorzugt.

**Gleitmittel** sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%. Besonders geeignet ist der Zusatz von höheren aliphatischen Säureamiden im Bereich von 0,05 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,1 bis 2,0 Gew.-% bevorzugt, insbesondere Polydimethylsiloxane mit einer Viskosität von 10 000 bis 1 000 000 $mm^2$/s.

Als **Stabilisatoren** können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Geeignete **Antiblockmittel** sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,05 bis 2 Gew.-%, vorzugsweise 0,1 bis 0,5 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind.

**Neutralisationsmittel** sind vorzugsweise Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 $m^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Die Streckbedingungen werden dabei so gewählt, daß die Folie möglichst balanced orientiert ist, d. h. sie weist nahezu isotrope Eigenschaften auf.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 9:1 und in Querrichtung vorzugsweise 6:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kuppenrahmens. Zweckmäßigerweise wird die Folie nicht <u>hoch</u>querverstreckt. Zur Erzielung der erfindungswesentlichen Schrumpfeigenschaften ist ein Verhältnis der Streckverhältnisse von quer/längs von kleiner 2, vorzugsweise kleiner 1,5, einzuhalten. Besonders bevorzugt liegt dieses Verhältnis im Bereich von 0,5 bis 1,5.

An die biaxiale Streckung der Folie schließt sich ihre Thermofixierung (Wärmebehandlung) an, wobei die Folie etwa 0,1 bis 10 s lang bei einer Temperatur von 60 bis 130 °C, vorzugsweise 80 bis 120 °C, gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C. Darüber hinaus wird die Längsstreckung vorteilhafterweise bei einer Temperatur von weniger als 130 °C, vorzugsweise im Bereich von 80 bis 120 °C, und die Querstreckung bei einer Temperatur größer 110 °C, vorzugsweise bei 130 bis 155 °C, durchgeführt.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Bei der Flammbehandlung wird die Folie über eine Kühlwalze geführt, oberhalb derer ein Gasbrenner angeordnet ist. Die Folie wird durch eine Nipwalze satt auf die Kühlwalze gepreßt. Das aus dem Brenner ausströmende Gas wird entzündet und bildet etwa 5 bis 10 mm große Flammen. Der oxydierende Teil der Flamme trifft dabei auf der Folienoberfläche auf und sorgt für eine Erhöhung der Oberflächenenergie der Folie. Sie liegt auch hier im üblichen Rahmen.

Die erfindungsgemäße Mehrschichtfolie besitzt eine Kombination von Eigenschaften, die sie in besonders hohem Maße für ihren bestimmungsgemäßen Verwendungszweck als siegelbare und schrumpffähige Verpackungsfolie geeignet macht.

Die ausgezeichneten Schrumpfeigenschaften gewährleisten ein enges, falten-und wellenfreies Einschlagsbild der Verpackung, wobei jedoch überraschenderweise die Siegelnähte optisch in keinerlei Weise beeinträchtigt werden. Gleichzeitig erfüllt die Folie alle weiteren Anforderungen, wie sie an Verpackungsmaterialien gestellt werden. Die Schrumpffolie ist gut auf schnellaufenden Verpackungsmaschinen zu verarbeiten. Sie weist eine ausgezeichnete Transparenz und einen hervorragenden Glanz auf. Darüber hinaus läßt sich die Folie insbesondere nach einer Corona- oder Flammbehandlung ausgezeichnet bedrucken oder auch metallisieren oder kaschieren. Damit eignet sich die erfindungsgemäße Folie hervorragend für ihren vorgesehenen Verwendungszweck als Verpackungsfolie, insbesondere als Folienverpackung für Backwaren, aber auch für Video- und Audiokassetten.

Zur Charakterisierung der Rohstoffe und der Folien wurden neben den obengenannten Methoden folgende Meßmethoden benutzt:

Schmelzflußindex:

DIN 53 735 bei 21,6 N Belastung und 230 °C.

Schmelzpunkt:

DSC-Messung, Maximum der Schmelzkurve, Aufheizgeschwindigkeit 20 °C/min.

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit:

| | |
|---|---|
| ≤ 20 % | = sehr gut (+ +) |
| ≥ 20 % | bis 25 % = gut (+) |
| ≥ 25 % | bis 30 % = mäßig (±) |
| ≥ 30 % | = schlecht (-) |

Glanz:

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wurde der Einstrahlwinkel mit 20 ° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden. Die Glanzbewertung (Einstrahlwinkel 20 °) erfolgt mit:

| | |
|---|---|
| $\geq 100$ | = sehr gut (+ +) |
| $\leq 90$ bis 100 | = gut (+) |
| $\leq 80$ bis 90 | = mäßig ($\pm$) |
| $\leq 80$ | = schlecht (-) |

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme kleiner 22 % betragt, mit gut (+), wenn die Trübungszunahme bei 22 bis 25 % liegt, mit mäßig ($\pm$), wenn die Trübungszunahme bei 25 bis 30 % liegt, und mit schlecht (-) bei Trübungszunahmen von größer 30 %.

Bestimmung der Siegelnahtfestigkeit:

Zwei 15 mm breite Folienstreifen werden übereinandergelegt und bei 105 °C, einer Siegelzeit von 0,5 s und einem Siegeldruck von 10 N/cm$^2$ (Gerät: Brugger Typ NDS, einseitig beheizte Siegelbacke) versiegelt. Die Siegelnahtfestigkeit wird nach der T-Peel-Methode bestimmt.

Bestimmung der Siegelanspringtemperatur:

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

Bestimmung der Coronabehandlungsintensität:

Die Coronabehandlung wurde so ausgeführt, daß die behandelte Folienoberfläche jeweils eine Behandlungsintensität von bevorzugt 38 bis 4l mN/m direkt nach der Behandlung besaß. Die Behandlungsintensität wurde mittels der sogenannten Tintenmethode (DIN 53 364) bestimmt.

Langzeitbehandlungsintensität:

Die Behandlungsintensitätsmessung wurde im Abstand von jeweils 14 Tagen wiederholt. Als sehr gut wurde das Abklingverhalten bezeichnet, wenn die Behandlungsintensität nach vier Monaten noch mindestens 37 mN/m betrug ($\Delta B \leq 2$ mN/m). Als schlecht wurde das Abklingverhalten bezeichnet, wenn die Behandlungsintensität kleiner als 35 mN/m betrug ($\Delta B \geq 4$ mN/m).

Schrumpf:

Die Längs- und Querschrumpfwerte beziehen sich auf die jeweilige Längenausdehnung der Folie (längs $L_0$ und quer $Q_0$) vor dem Schrumpfprozeß. Die Längsrichtung ist die Maschinenrichtung, als Querrichtung wird entsprechend die Richtung quer zum Maschinenlauf definiert. Der Probekörper wird im Umluftofen bei der jeweiligen Temperatur (90 bzw. 120 °C) über eine Dauer von 15 min geschrumpft. Anschließend werden die verbliebenen Längenausdehnungen des Probekörpers längs und quer erneut bestimmt ($L_1$ und $Q_1$). Als Schrumpf wird dann die Differenz der ermittelten Längenausdehnungen im Verhaltnis zur ursprünglichen Länge $L_0$ und $Q_0$ angegeben.

$$Längsschrumpf\ L_s = \frac{L_0 - L_1}{L_0}$$

$$Querschrumpf\ Q_s = \frac{Q_0 - Q_1}{Q_0}$$

Diese Bestimmungsmethode für den Längs- und Querschrumpf entspricht DIN 404 34.

Maschinengängigkeit:

Die Bestimmung der Maschinengängigkeit auf der Einschlagmaschine erfolgte visuell und wurde wie folgt bewertet:

| sehr gut (+ +) | < 2 % | der Probepäckchen sind mangelhaft eingeschlagen |
|---|---|---|
| gut (+) | 2-6 % | der Probepäckchen sind mangelhaft eingeschlagen |
| mäßig (+-) | 6-12 % | der Probepäckchen sind mangelhaft eingeschlagen |
| schlecht (-) | 12 % | und mehr der Probepäckchen sind mangelhaft einge schlagen |

Einschlagbild:

Das Einschlagbild und die optische Qualität der Siegelnähte wurden visuell beurteilt.

**Beispiel**

Es wurde durch Coextrusion und anschließende stufenweise Orientierung in Längs- und Querrichtung eine dreischichtige Folie mit einer Gesamtdicke von 18 μm hergestellt. Die Deckschichten hatten eine Dicke von jeweils 0,6 μm.

Basisschicht:

89,8 Gew.-%  statistisches Propylen-Ethylen-Copolymeres mit einem Ethylengehalt von 4,5 Gew.-%, einer Schmelztemperatur von $T_M$ = 137 °C und einer Schmelzenthalpie von $\Delta h_M$ = 70 J/g
10,0 Gew.-%  isotaktisches Polypropylen
0,1 Gew.-%  Erucasäureamid
0,1 Gew.-%  N,N-bis-ethoxyalkylamin

Deckschichten:

99,8 Gew.-%  einer Polymermischung aus $C_2$-$C_3$-$C_4$-Terpolymer und $C_3$-$C_4$-Copolymer entsprechend einem Gehalt von 0,7 Gew.-% $C_2$ und 81,3 Gew.-% $C_3$ und 18 Gew.-% $C_4$, bezogen auf die Polymermischung (Tafmer XR 107 LN)
0,2 Gew.-%  $SiO_2$ als Antiblockmittel mit einer mittleren Teilchengröße von 4 μm

Die Herstellungsbedingungen in den einzelnen Verfahrensschritten sind:

Extrusion:       Temperaturen Basisschicht: 250 °C
                 Temperaturen Deckschichten: 270 °C
                 Temperatur der Abzugswalze: 30 °C

Längsstreckung: Temperatur T = 100 °C

Längsstreckverhältnis = 6,5

Querstreckung: Temperatur T = 140 °C

Querstreckverhältnis = 7,3

Konvergenz 25 %

Fixierung: Temperatur T = 60 °C

Die auf diese Weise hergestellte Folie hat die in der Tabelle aufgelisteten Eigenschaften. Die Folie wurde vor der Aufrollung einer Coronabehandlung unterzogen, um eine Bedruckbarkeit zu gewährleisten. Diese coronabehandelte Seite wird als D-Seite und die unbehandelte Seite wird als A-Seite bezeichnet. Die Oberflächenspannung der Folie infolge dieser Behandlung beträgt 40 mN/m.

TABELLE

| | Schrumpf [%] 120 °C, 15 min | | Schrumpf [%] 90°C, 15 min | | Siegelanspringtemperatur 10 N/cm$^2$ 0,5 s | | Siegelnahtfestigkeit 10 N/cm$^2$ 0,5 s, 105 °C | | Glanz | Trübung |
|---|---|---|---|---|---|---|---|---|---|---|
| | längs | quer | längs | quer | A-Seite | D-Seite | A-Seite | D-Seite | | |
| Beispiel 1 | 18 | 22 | 3 | 5 | 88 °C | 100 °C | 2,2 | 2,1 | 105 | 2,5 |

**Patentansprüche**

1. Niedrig siegelnde, transparente, biaxial orientierte, coextrudierte Polyolefin-Mehrschichtfolie umfassend eine Basisschicht und mindestens eine einseitig aufgebrachte Deckschicht, dadurch gekennzeichnet, daß

die Basisschicht eine Mischung enthält, welche ein Polypropylen-Homopolymer und/oder Copolymer aus α-Olefinen mit 2 bis 8 C-Atomen und/oder ein Terpolymer aus Propylen und einem weiteren α-Olefin mit 2 bis 8 C-Atomen umfaßt,

wobei diese Mischung mindestens 50 Gew.-%, bezogen auf die Gesamtmischung, Ethylen-Propylen-Butylen-Terpolymere und/oder ein Ethylen-Propylen-Copolymer und/oder Propylen-Butylen-Copolymer umfaßt, und wobei diese Co- und/oder Terpolymeren einen Schmelzpunkt im Bereich von 100 - 150 °C haben, und

die Deckschicht eine Mischung enthält, welche ein Ethylen-Propylen-Butylen-Terpolymeres und/oder ein Ethylen-Propylen-Copolymeres und/oder ein Ethylen-Butylen-Copolymeres und/oder ein Propylen-Butylen-Copolymeres enthält und

a) die Mehrschichtfolie bei 120 °C einen Längsschrumpf von größer 10 %, und einen Querschrumpf von größer 10 %, aufweist; und

b) die Mehrschichtfolie bei 90 °C einen Längsschrumpf von höchstens 10 %, und einen Querschrumpf von höchstens 10 %, aufweist; und

c) die Deckschicht eine Siegelanspringtemperatur von höchstens 124 °C, aufweist.

2. Mehrschichtfolie nach Anspruch 1, dadurch gekennzeichnet, daß die Basisschicht eine Mischung enthält, welche ein Polypropylen-Homopolymer und/oder ein Ethylen-Propylen-Copolymer und/oder ein Ethylen-Propylen-Butylen-Terpolymer umfaßt.

3. Mehrschichtfolie nach einem oder mehreren der Ansprüche 1 bis 2, dadurch gekennzeichnet, daß die Basisschicht im wesentlichen eine Mischung enthält, welche aus Polypropylen-Homopolymer und Ethylen-Propylen-Copolymer oder Polypropylen-Homopolymer und Ethylen-Propylen-Butylen-Terpolymer besteht.

4. Mehrschichtfolie nach einem oder mehreren der Ansprüche 1 bis 3, dadurch gekennzeichnet, daß die Basisschicht 60 bis 98 Gew.-%, bezogen auf die Gesamtmischung, Ethylen-Propylen-Copolymer und/oder Ethylen-Propylen-

9

Butylen-Terpolymer und/oder Propylen-Butylen-Copolymer umfaßt.

5. Mehrschichtfolie nach einem oder mehreren der Ansprüche 1 bis 4, dadurch gekennzeichnet, daß die Basisschicht ein Kohlenwasserstoffharz enthält.

6. Mehrschichtfolie nach einem oder mehreren der Ansprüche 1 bis 5, dadurch gekennzeichnet, daß die Basisschicht als Gleitmittel Erucasäureamid enthält.

7. Mehrschichtfolie nach einem oder mehreren der Ansprüche 1 bis 6, dadurch gekennzeichnet, daß die Deckschichten ein Antiblockmittel enthalten.

8. Mehrschichtfolie nach einem oder mehreren der Ansprüche 1 bis 7, dadurch gekennzeichnet, daß die Dicke der Deckschichten im Bereich von 0,1 bis 4 μm liegt.

9. Verfahren zur Herstellung der Folie nach einem der Ansprüche 1 bis 8, bei dem mittels Coextrusion in einer Breitschlitzdüse zunächst eine Vorfolie hergestellt wird, die dann auf einer Kühlwalze verfestigt und anschließend in Längs- und Querrichtung durch Strecken orientiert wird, dadurch gekennzeichnet, daß die Längsstreckung bei einer Temperatur von Weniger als 130 °C durchgeführt wird, vorzugsweise im Bereich von 80 bis 120 °C, und mit einem Streckverhältnis im Bereich von 4:1 bis 9:1.

10. Verfahren nach Anspruch 9, dadurch gekennzeichnet, daß die Querstrecktemperatur größer als 120 °C ist, vorzugsweise im Bereich von 130 bis 155 °C, wobei das Querstreckverhältnis im Bereich von 6:1 bis 10:1 liegt.

11. Verfahren nach Anspruch 9 oder 10, dadurch gekennzeichnet, daß das Verhältnis der Streckverhältnisse quer zu lang kleiner 2 ist, vorzugsweise im Bereich von 0,5 bis 1,5, liegt.

12. Verwendung einer Mehrschichtfolie nach einem oder mehreren der Ansprüche 1 bis 8 als Verpackung.

**Claims**

1. A low-boiling transparent biaxially orientated co-extruded multilayer polyolefin film comprising a base layer and an outer layer applied to at least one side, characterised in that

   the base layer contains a mixture which comprises a polypropylene homopolymer and/or copolymer of $\alpha$-olefins with 2 to 8 C-atoms and/or a terpolymer of propylene and a further $\alpha$-olefin with 2 to 8 C-atoms,

   whereby this mixture comprises at least 50% by weight; in relation to the total mixture, of ethylene-propylene-butylene-terpolymers and/or an ethylene-propylene-copolymer and/or propylene-butylene-copolymer, whereby these co-and/or terpolymers have a melting point in the range from 100 - 150°C, and

   the outer layer contains a mixture which contains an ethylene-propylene-butylene-terpolymer and/or an ethylene-propylene-copolymer and/or an ethylene-butylene copolymer and/or a propylene-butylene-copolymer and

   a) the multilayer film has at 120°C a longitudinal shrinkage rate of more than 10% and a transverse shrinkage rate of more than 10% and

   b) the multilayer film has at 90°C a longitudinal shrinkage rate of at most 10% and a transverse shrinkage rate of at most 10% and

   c) the outer layer has a minimum heat sealing temperature of at most 124°C.

2. A multilayer film according to Claim 1, characterised in that the base layer contains a mixture which comprises a polypropylene-homopolymer and/or an ethylene-propylene-copolymer and/or an ethylene-propylene-butylene terpolymer.

3. A multilayer film according to one or more of Claims 1 to 2, characterised in that the base layer contains substantially a mixture which consists of polypropylene-homopolymer and ethylene-propylene-copolymer or polypropylene-homopolymer and ethylene-propylene-butylene terpolymer.

4. A multilayer film according to one or more of Claims 1 to 3, characterised in that the base layer comprises 60 to 98% by weight, in relation to the total mixture, of ethylene-propylene-copolymer and/or ethylene-propylene-butylene-terpolymer and/or propylene-butylene-copolymer.

5. A multilayer film according to one or more of Claims 1 to 4, characterised in that the base layer contains a hydrocarbon resin.

6. A multilayer film according to one or more of Claims 1 to 6, characterised in that the base layer contains erucic acid amide as a lubricant.

7. A multilayer film according to one or more of Claims 1 to 6, characterised in that the outer layers contain an anti-blocking agent.

8. A multilayer film according to one or more of Claims 1 to 7, characterised in that the thickness of the outer layers is in the range from 0.1 to 4 μm.

9. A method of manufacturing the film according to one of Claims 1 to 8, in which, by means of co-extrusion in a sheet die, firstly a pre-film is produced which is then solidified over a cooling roll and is then orientated by being stretched in longitudinal and transverse directions, characterised in that longitudinal stretching is carried out at a temperature of less than 130°C, preferably in the range from 80 to 120°C and with a stretching ratio in the range from 4:1 to 9:1.

10. A method according to Claim 9, characterised in that the transverse stretching temperature is greater than 120°C, and is preferably in the range from 130 to 155°C, the transverse stretching ratio being in the range from 6:1 to 10:1.

11. A method according to Claim 9 or 10, characterised in that the proportion of the stretching ratios transversely to longitudinally is less than 2 and is preferably in the range from 0.5 to 1.5.

12. Use of a multilayer film according to one or more of Claims 1 to 8 as a packaging material.

**Revendications**

1. Feuille multicouche de polyoléfine coextrudée, soumise à une orientation biaxe, transparente, à basse température de thermosoudage, comprenant une couche de base et au moins une couche de recouvrement appliquée sur un côté, caractérisée en ce que

   la couche de base contient un mélange qui comprend un homopolymère de polypropylène et/ou un copolymère d'α-oléfines contenant de 2 à 8 atomes de carbone, et/ou un terpolymère de propylène et d'une autre α-oléfine contenant de 2 à 8 atomes de carbone,

   ce mélange comprenant, à concurrence d'au moins 50% en poids rapportés au mélange total, un terpolymère d'éthylène-propylène-butylène et/ou un copolymère d'éthylène-propylène et/ou un copolymère de propylène-butylène, et dans lequel ces copolymères et/ou terpolymères possèdent un point de fusion dans le domaine de 100 à 150°C, et

   la couche de recouvrement contient un mélange qui contient un terpolymère d'éthylène-propylène-butylène et/ou un copolymère d'éthylène-propylène et/ou un copolymère d'éthylène-butylène et/ou un copolymère de propylène-butylène, et

   a) la feuille multicouche présente, à une température de 120°C, un retrait en direction longitudinale supérieur à 10% et un retrait en direction transversale supérieur à 10%; et

   b) la feuille multicouche présente, à une température de 90°C, un retrait maximal de 10% en direction longitudinale et un retrait maximal de 10% en direction transversale; et

   c) la couche de recouvrement présente une température maximale d'amorçage du thermosoudage de 124°C.

2. Feuille multicouche selon la revendication 1, caractérisée en ce que la couche de base contient un mélange qui comprend un homopolymère de polypropylène et/ou un copolymère d'éthylène-propylène et/ou un terpolymère d'éthylène-propylène-butylène.

3. Feuille multicouche selon une ou plusieurs des revendications 1 à 2, caractérisée en ce que la couche de base contient essentiellement un mélange qui est constitué par un homopolymère de propylène et par un copolymère d'éthylène-propylène ou bien par un homopolymère de propylène et par un terpolymère d'éthylène-propylène-butylène.

4. Feuille multicouche selon une ou plusieurs des revendications 1 à 3, caractérisée en ce que la couche de base comprend, à concurrence de 60 à 98% en poids rapportés au mélange total, un copolymère d'éthylène-propylène et/ou un terpolymère d'éthylène-propylène-butylène et/ou un copolymère de propylène-butylène.

5. Feuille multicouche selon une ou plusieurs des revendications 1 à 4, caractérisée en ce que la couche de base contient une résine d'hydrocarbure.

6. Feuille multicouche selon une ou plusieurs des revendications 1 à 5, caractérisée en ce que la couche de base contient de l'amide de l'acide érucique à titre d'agent de glissement.

7. Feuille multicouche selon une ou plusieurs des revendications 1 à 6, caractérisée en ce que les couches de recouvrement contiennent un agent s'opposant à l'adhérence de contact entre feuilles.

8. Feuille multicouche selon une ou plusieurs des revendications 1 à 7, caractérisée en ce que l'épaisseur des couches de recouvrement se situe dans le domaine de 0,1 à 4 μm.

9. Procédé pour préparer la feuille selon l'une quelconque des revendications 1 à 8, dans lequel on prépare, par coextrusion dans une filière à fente large, d'abord une feuille préliminaire que l'on durcit ensuite sur un rouleau de refroidissement et que l'on oriente par la suite par étirage en direction longitudinale et en direction transversale, caractérisé en ce qu'on effectue l'étirage en direction longitudinale à une température inférieure à 130°C, de préférence dans le domaine de 80 à 120°C et avec un rapport d'étirage dans le domaine de 4:1 à 9:1.

10. Feuille multicouche selon la revendication 9, caractérisée en ce que la température de l'étirage en direction transversale est supérieure à 120°C, de préférence se situe dans le domaine de 130 à 155°C, le rapport d'étirage en direction transversale se situant dans le domaine de 6:1 à 10:1.

11. Feuille multicouche selon la revendication 9 ou 10, caractérisée en ce que le rapport de l'étirage en direction transversale à l'étirage en direction longitudinale est inférieur à 2, de préférence se situe dans le domaine de 0,5 à 1,5.

12. Utilisation d'une feuille multicouche selon l'une ou plusieurs des revendications 1 à 8 à titre d'emballage.